# Europäisches Patentamt
# European Patent Office
# Office européen des brevets

(11) Publication number: **0 123 807**
**B1**

## EUROPEAN PATENT SPECIFICATION

(45) Date of publication of patent specification: **26.10.88**

(51) Int. Cl.⁴: **H 02 P 8/00, G 04 C 3/14**

(21) Application number: **84101735.3**

(22) Date of filing: **20.02.84**

(54) **Driving and detection of back EMF in permanent magnet step motors.**

(30) Priority: **29.03.83 US 480049**

(43) Date of publication of application:
**07.11.84 Bulletin 84/45**

(45) Publication of the grant of the patent:
**26.10.88 Bulletin 88/43**

(84) Designated Contracting States:
**DE FR GB**

(56) References cited:
**FR-A-2 425 756**
**US-A-4 255 693**

**SCHMUCK & UHREN, no. 16, August 1981, pages 1-10, Ulm; H. EFFENBERGER et al.: "Elektronisch selbstgesteuerter einphasiger Mikromotor"**

(73) Proprietor: **International Business Machines Corporation**
**Old Orchard Road**
**Armonk, N.Y. 10504 (US)**

(72) Inventor: **Hair, Victor David**
**9437 Goldsmith Lane**
**Mint Hill North Carolina 28212 (US)**

(74) Representative: **Atchley, Martin John Waldegrave**
**IBM United Kingdom Limited Intellectual Property Department Hursley Park**
**Winchester Hampshire SO21 2JN (GB)**

Courier Press, Leamington Spa, England.

## Description

The present invention relates to the driving and controlling of closed loop step motors. More particularly, it relates to the detection of the back EMF induced in the windings of a step motor by a permanent magnet in the rotor of the motor. The value of this back EMF can be used to indicate the position of the rotor of the motor.

The use of the windings of a step motor both to drive the motor and to provide the position determining feedback pulses is known in the prior art. In each of the prior art systems, however, the feedback signals from the motor windings must be subjected to complex processing which increases the cost of the system. Such complex processing is required because, whenever current is induced in a winding which is used as a detection winding, voltage drops due to this induced current are added to the back EMF induced by the permanent magnet of the motor. Thus the voltage drops due to the induced currents must be reconstructed and subtracted from the signal from the winding in order to detect the true value of the back EMF induced by the permanent magnet of the motor.

U.S. Patent US—A—3,282,471 teaches using a reconstructed locked rotor response as the reference signal, which has the effect of subtracting it from the signal from the winding.

U.S. Patent US—A—4,234,838 uses a similar method on a variable reluctance motor.

U.S. Patent US—A—4,065,708 teaches the use of a summing amplifier 6 for subtracting the output of amplifier 2 which simulates the voltage drop due to current.

A major drawback of these methods is the requirement of matching gain coefficients in the reconstruction circuitry with parameters of the motor. Another drawback is that some of these methods involve differentiation which is sensitive to noise and is subject to drift.

When reconstructing a voltage drop due to an induced current, the inductance and the resistance of the winding enter into the reconstruction calculations. In particular, the winding resistance varies with temperature, introducing a phase error in the detected signal. Although the inductance of the windings of a permanent magnet step motor is often assumed to be constant, in actual fact there often is at least some variation as a function of the angle of the rotor, and some variation as a function of the temperature of the magnetic circuit of the motor. This variation is borne out by the observations of B. C. Kua and K. Butts as discussed in the Test Results Section III of their paper entitled "Closed Loop EMF Sensing" published May 1982 in the Proceedings, Eleventh Annual Symposium on Incremental Motion Control Systems and Devices.

Another prior attempt at separating the induced EMF from the voltage drops due to induced currents is discussed by Toshiro Higuchi in his paper entitled "Closed Loop Control of PM Step Motors by Sensing Back EMF" which was also published in May 1982 in the above Proceedings.

Mr. Higuchi added special sense coils to the motor and used external transformers to cancel the induced voltage drop component in the sense coils. The drawbacks of this method are increased motor cost and the requirement for tuning the external transformers to match the winding inductance of the motor.

U.S. Patent US—A—4,255,693 shows another complex method of compensating for the voltage drops due to current. This patent drives the windings of a permanent magnet step motor with a pulse width modulated H driver which regulates the winding current to a predetermined waveform. Because the EMF induced by the permanent magnet of the motor affects the current, the pulse width modulator continually compensates by varying the pulse widths. A filter and phase shifter are used to detect these varying pulse widths which are then used as the indirect equivalent of the EMF induced by the permanent magnet.

The object of the present invention is to provide an improved drive and detection circuit for a step motor which excites the step motor in such a way that the true value of the back EMF induced in the windings of the motor can be detected.

According to the present invention a drive and detection circuit for a step motor of the type having a permanent magnet rotor and two sets of stator windings comprising

a supply voltage for said step motor,

drive means connected to said supply voltage for providing excitation of said stator windings, and

detection means for detecting the value of the back EMF induced in each set of windings by the permanent magnet rotor, is characterised in that

said drive means provides orthogonal excitation of said stator windings whereby only one set of windings is excited at any instant.

By exciting the windings of the motor orthogonally the circuit ensures that when one set of windings is excited the other set of windings is not excited and the value of the back EMF detected in the other set of windings is the true value of the induced back EMF. The value of the back EMF can be used to control the excitation of the windings of the motor.

According to a preferred embodiment of the invention the above drive and detection circuit is characterised in that

said drive means operates to dampen any residual current flowing in each set of windings after the termination of excitation so that there is no residual current flowing in said set of windings when said detection means detects a zero value of the back EMF induced in said set of windings.

**0 123 807**

In order that the invention may be more readily understood reference will now be made to the Figures of the accompanying drawings, in which:

Figure 1 shows a schematic of a typical two phase permanent magnet step motor,

Figure 2 shows the EMF waveforms induced in any one of the windings of each phase of the motor of Figure 1,

Figure 3 is a simplified schematic of an H drive circuit for one phase of the motor of Figure 1,

Figure 4 is an equivalent circuit of the circuit of Figure 3 as the drive current is decaying in the winding,

Figure 5 shows the excitation waveforms when the motor of Figure 1 is running at constant velocity,

Figure 6 shows a detailed schematic of a drive circuit for driving the two phase permanent magnet step motor of Figure 1 in accordance with the present invention,

Figure 7 shows a detailed schematic of the components of a circuit used to detect the EMF induced in the stator windings of the motor of Figure 1 by the permanent magnet rotor of the motor in accordance with the present invention,

Figure 8 shows the voltages at the terminals of the windings of the motor in three conditions: as the motor is accelerated, as the motor operation is changed from steady state run to deceleration, and as the motor is decelerated, and

Figure 9 is a flow diagram of the microprogram of Table 1 of the specification.

The direct detection of the back EMF induced in the windings of a permanent magnet step motor as accomplished by a drive and detection circuit in accordance with the present invention is based upon the fact that the open circuit voltage across each phase winding is equal to the back EMF induced in that winding by the permanent magnet of the motor. During operation of many step motors, however, the phase windings are usually not truly open circuited and, in the case of "four phase two on" excitation, the windings are not even magnetically decoupled. Therefore the key to direct detection as accomplished by a circuit in accordance with the present invention lies in the type of drive circuit and in the sequence of excitation of windings which are orthogonal to each other.

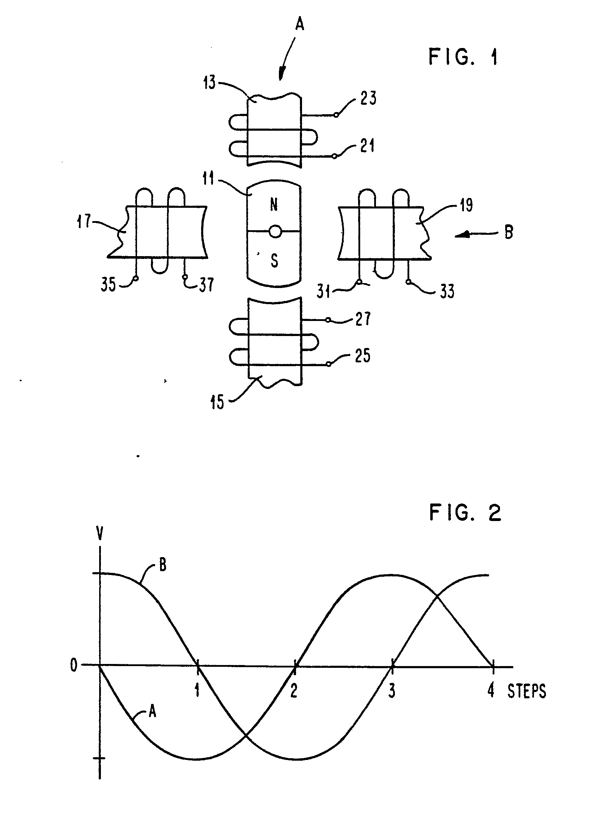

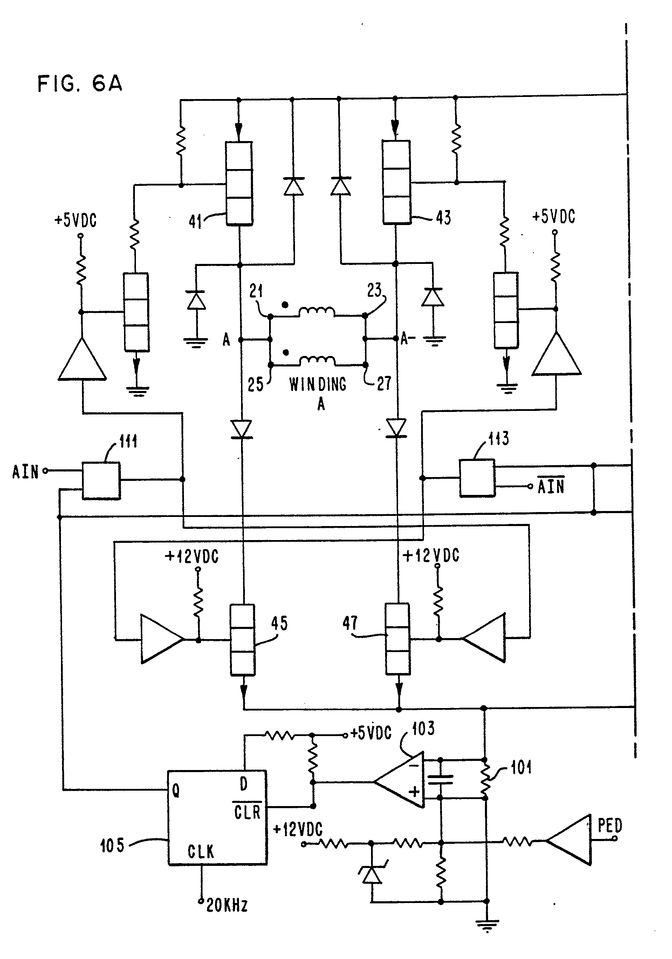

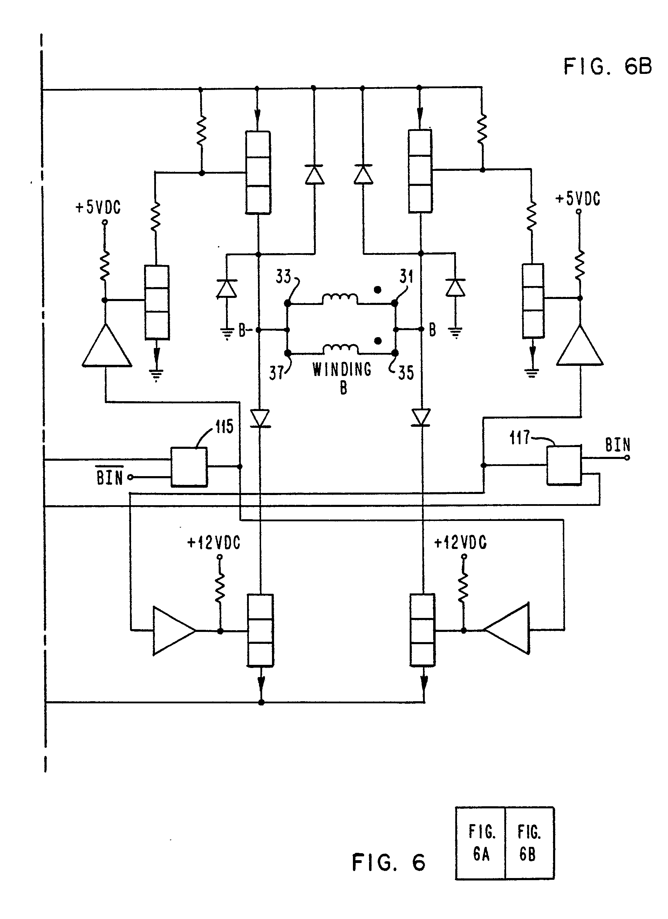

In Figure 1 there is shown a schematic of a two phase permanent magnet step motor having orthogonal windings. In actual implementation, the permanent magnet motor will be constructed as a multi-tooth gear and the stator poles will have corresponding teeth so as to permit many motor steps per revolution of the rotor. These implementation details are well known in the art and will not be described in detail here. Referring again to Figure 1, the rotor 11 of the motor is shown as including a permanent magnet forming North and South poles at the ends of the rotor. A pair of stator poles 13 and 15 provide one pole pair A of the two pole motor. Another pair of stator poles 17 and 19 provide another pole pair B and are placed in a 90° relationship to the A poles 13 and 15. Each of these poles has a respective winding. These windings have terminals labelled 21, 23 and 25, 27 for the A pole windings and 31, 33, and 35, 37 for the B pole windings. The windings are connected to a drive circuit in accordance with the invention as shown in detail in Figure 6.

As the permanent magnet rotor 11 rotates, a back EMF will be induced in each one of the windings. Referring now to Figure 2, the waveforms of the EMF induced in each of the windings on the A and B poles is shown in the graph with the zero position along the x-axis corresponding to the position of the rotor as shown in Figure 1. The two waveforms of Figure 2 are simple sinusoidal quadrature waveforms and thus need no further explanation. Each zero crossing of the waveform corresponds with a detent or step angle position of the rotor of the motor.

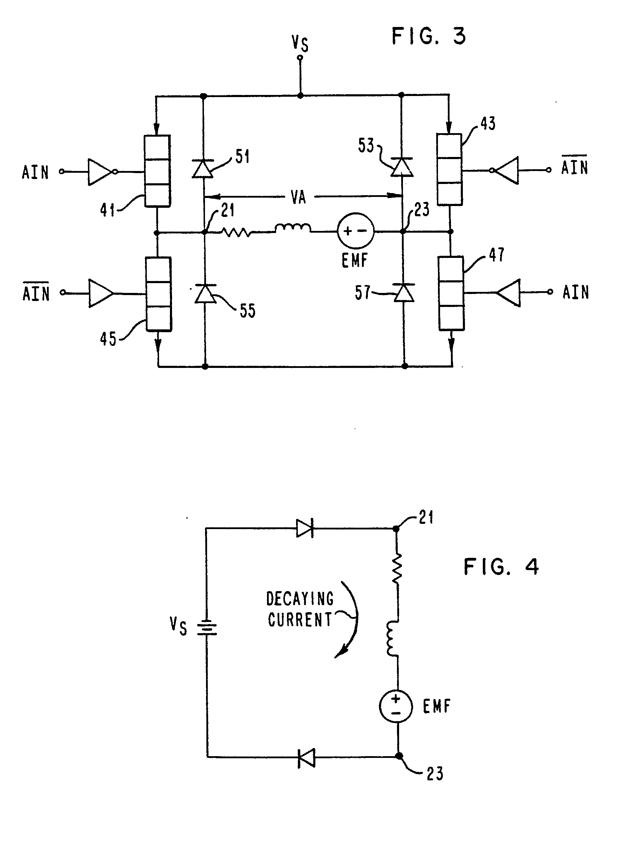

As mentioned above, important factors in the ability to detect the step motor rotor position directly from the back EMF waveforms are the type of drive circuit employed and the phase excitation sequence. A preferred embodiment of a drive circuit in accordance with the invention is the two phase "H" driver shown in a simplified schematic in Figure 3. This circuit illustrated permits bipolar excitation of one winding from a single supply voltage. Two drive circuits of this type or any other suitable drive circuits are used in such a way that the windings of the two poles are excited orthogonally. In order to be able to detect the zero crossings of the back EMF waveforms, the two pole motor must be driven with only one phase "on" at a time so that each winding is "off" half the time. Also each winding when "off" must be magnetically decoupled from the other winding which is "on". This form of excitation is known as orthogonal excitation.

As previously mentioned, in order to be able to detect back EMF directly, the winding providing the back EMF signal must effectively be open circuited thereby eliminating any voltage drop due to current flow during excitation or at the end of excitation. Referring again to Figure 3, the open circuit condition of the winding when it is "off" means that all four transistors 41, 43, 45, and 47 are not conducting current. Any inductive kick VA which occurs as transistors 41 and 47, for example, turn off, is clamped by diodes 55 and 53 to approximately one or two volts above the power supply voltage depending upon the diode voltage drop. These suppression diodes 55 and 53 continue to conduct until the field energy is completely dissipated as the field due to the previous excitation collapses. As VA becomes equal to or less than the power supply voltage, no further current can flow and thereafter the diodes cease conducting and the winding is effectively open circuited. After the field due to the previous excitation has collapsed, and current ceases to flow, the voltage across the terminals 21, 23 of the unexcited winding is only that EMF induced in the winding by the permanent magnet of the rotor as it continues to rotate under the influence of the other winding which is excited.

Referring now to Figure 4, an equivalent circuit shows the clamping of the above described inductive

3

kick in a winding to a magnitude not significantly greater than the supply voltage VS as the motor is accelerating. Note for future reference that when the motor is accelerating, the EMF opposes current flow. As will be mentioned later, when the motor is decelerating, the EMF polarity reverses and aids current flow which yields a longer current decay time.

If, in the previous example, transistors 43 and 45 had been conducting and were turned off in order to interrupt the excitation of the windings, diodes 57 and 51 would provide the clamp current path to control the magnitude of the inductive kick until the energy of the collapsing excitation fluid had been dissipated.

With the previous discussion in mind, it can be seen that it is important for the correct operation of a circuit in accordance with the invention that the waveform of the EMF induced in a winding by the permanent magnet rotor will cross zero during the off period of the excitation of that winding in order to be accurately measured.

Likewise, the rate of decay of current in the winding must be sufficiently high so that the open circuit condition occurs prior to the zero crossing of the waveform of the EMF induced by the permanent magnet rotor. Finally, the motor must be driven as an orthogonal phase machine with only one phase winding "on" at a time so that the "on" and "off" phase windings are decoupled.

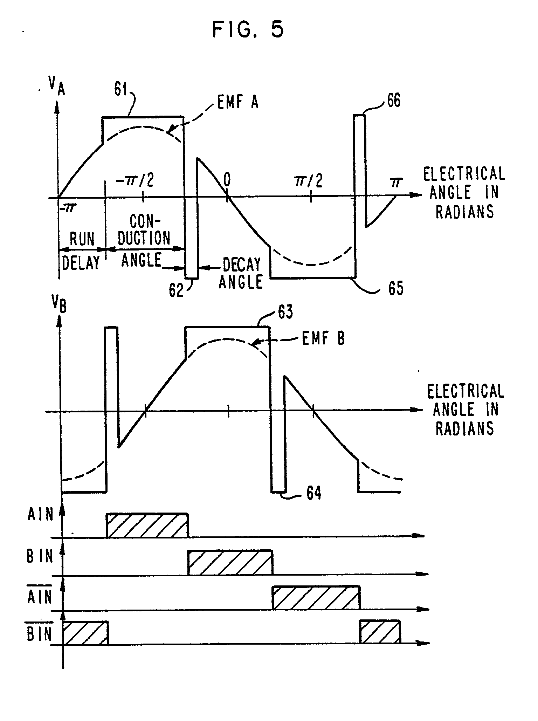

Referring now to Figure 5, typical waveforms of the the voltages in the windings of the A and B poles as the motor is rotating at a constant velocity are shown in the graphs. The y-axis of the graphs represents the voltages VA, VB in the windings of the A and B poles respectively and the x-axis represents the electrical angle through which the rotor of the motor rotates. This electrical angle is greater than the physical angle through which the rotor rotates since, as described above, the stator pole will have a number of teeth corresponding to the number of teeth on the rotor, thereby permitting many motor steps per revolution of the rotor.

On each graph there are two curves, one representing the voltage across the corresponding pair of windings (A or B) resulting from the supply of excitation pulses and the other representing the EMF induced in the windings by the rotation of the permanent magnet in the rotor of the motor. It will be noted that the curve representing the EMF crosses the zero value (y-axis) for every $\pi$ radians change in the electrical angle.

The supply of excitation pulses is represented by the lines labelled, AIN, BIN, $\overline{\text{AIN}}$, $\overline{\text{BIN}}$ corresponding respectively to the excitation of the transistor pairs 41, 47 and 43, 45 for the A and B pairs of windings as illustrated in the drive circuit of Figure 3. Pulses AIN, BIN, $\overline{\text{AIN}}$, $\overline{\text{BIN}}$ follow in sequence with no gaps between successive pulses. When a pulse AIN is supplied to the circuit a positive voltage is produced across the A pole windings for the time length of the pulse. The production of this voltage for the length of the AIN pulse results in the rotation of the rotor through a conduction angle 61. Upon interruption of the excitation pulse AIN an inductive kick is induced resulting in the production of a negative voltage pulse across the A pole windings. This voltage pulse continues for a time during which the rotor rotates through a decay angle 62.

Supply of an $\overline{\text{AIN}}$ pulse results in the production of a negative voltage causing rotation of the rotor through a conduction angle 65. The interruption of this pulse causes the production of another inductive kick resulting in a positive voltage pulse continuing while the rotor rotates through a decay angle 66.

For the B pole windings, the supply of a pulse BIN results in the production of a positive voltage causing the rotation of the rotor through a conduction angle 63. The interruption of this pulse results in the production of a negative pulse continuing while the rotor rotates through a decay angle 64.

In order to detect the zero crossings of the waveform of the EMF induced in each winding by the permanent magnet rotor of the motor, the sum of the conduction angle and the decay angle (excitation angle) must lie within the range ($-\pi$ to 0) in order to provide positive average torque. Likewise, if the sum of these angles lies within the range (0 to $\pi$) a negative average torque is provided for decelerating the motor.

In order to provide a suitably limited conduction angle, it has been found that the use of a low impedance motor with a large supply voltage provides good performance at low cost. This may be explained with reference to Figure 5, where the centre of the conduction angle is located at $-\pi/2$. This results in maximum average positive torque at low speeds or whenever the current rise and fall times are negligibly small compared to the step period. The use of a low impedance motor thus allows optimum utilisation of available motor torque without allowing the position of the excitation angle to fall outside the range ($-\pi$ to 0). The use of a low impedance motor and high supply voltage also yields a quick current decay which minimizes the decay angle by shortening the decay time, thus providing more flexibility in the positioning of the conduction angle. For example in the limit of zero decay angle, it is possible to vary the conduction angle from one centred at $-3\pi/4$ radians to one centered at $-\pi/4$ radians while maintaining its position within the range from ($-\pi$ to 0). This arrangement allows some degree of closed loop velocity control over the motor.

Low motor impedance and high drive voltage are even more important during motor deceleration when the excitation angle is in the range (0 to $\pi$). During this range of rotation, the collapsing excitation field and the EMF induced by the permanent magnet of the rotor are additive which increases the length of time required for the current in the winding to decay to zero. The large supply voltage and low impedance overcome the effect of the induced EMF due to the permanent magnet of the rotor and provide a rapid current decay.

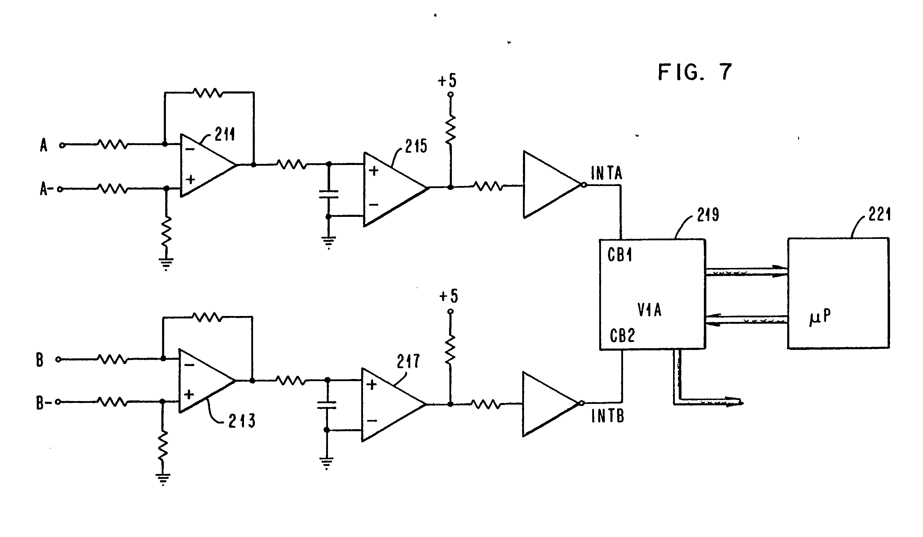

Referring again to Figure 5, it can be seen that conduction angle 61 corresponds to the conduction of

4

transistors 41 and 47 of the driver of Figure 3 for the A poles under the control of the input signal AIN. Decay angle 62 corresponds to that period of time when diodes 55 and 53 are clamping the winding voltage to the supply voltage, causing the current in the winding to decay to zero rapidly. Likewise, conduction angle 63 corresponds to the conduction of transistors 41 and 47 of the driver driving the B pole windings under the control of signal BIN. Decay angle 64 corresponds to the conduction of current through diodes 55 and 53 of the B pole driver. Conduction angle 65 corresponds to the conduction of excitation current through transistors 43 and 45 of the A pole driver of Figure 3 under the control of input signal $\overline{AIN}$. Decay angle 66 corresponds to the dissipation of excitation field energy through diodes 57, 51. It will be noted in Figure 5 that no current is flowing in the winding as the voltage induced in the winding by the permanent magnet of the rotor is crossing zero which is a detent angle of the motor. Therefore, it only remains to detect this zero crossing angle in order to provide a signal corresponding to a detent angle of the motor. A detailed schematic of a circuit used to detect this zero crossing is shown in Figure 7.

Prior to discussion of Figure 7, attention will be directed to the detailed drive circuit of Figure 6 which embodies the invention. This circuit comprises a pulse width modulating current limiting circuit including a current sense resistor 101 and a comparator 103 and a bistable circuit 105. Comparator 103 compares the voltage across current sense resistor 101 (which corresponds to the current through one of the motor stator pairs of windings) with a reference voltage derived from a DC supply. When the current in resistor 101 rises to such a level so that the voltage across resistor 101 exceeds the reference voltage, the bistable circuit 105 is reset. When circuit 105 is reset, its output acts to inhibit output from any of the AND gates 111, 113, 115, and 117 which normally provide the sequencing control signals (AIN, $\overline{AIN}$, BIN, $\overline{BIN}$) to transistors 41, 43, 45 and 47 for each of the windings of the A poles and the B poles. Circuit 105 also receives a clock input signal of 20 kilohertz to repeatedly set bistable circuit 105 after the current in resistor 101 has decayed slightly. In this way, a low impedance motor can be driven from a high voltage supply without causing excessive currents to build up in the motor windings together with the associated excessive temperatures.

Referring now to Figure 7, there is shown a detailed schematic of the circuit in accordance with the invention which detects the zero crossings of the waveform of the EMF induced in each winding by the rotation of the permanent magnet rotor. The input terminals at the left of Figure 7 labelled A, A−, B, B− are the terminals of the windings of the A poles and the B poles respectively and correspond to the nodes labelled identically in Figure 6. The inputs at A, A−, B, B− which represent the EMF's induced in the windings, are supplied to the terminals of differential amplifiers 211, 213 with one input referenced to zero as illustrated. Differential amplifiers 211 and 213 perform two functions. Firstly, each amplifier multiplies its input voltages by a scaling factor to reduce those voltages to appropriate levels. Secondly, each differential amplifier references the input voltages to ground (zero volts) for processing by logic and microprocessor circuits. Connected to the outputs of the differential amplifiers 211 and 213 are comparators 215 and 217 respectively. These comparators compare the now referenced and scaled voltages representing the EMF induced in each winding by the permanent magnet of the rotor to zero volts and provide an output signal as each of the voltages crosses the zero volts value. This output signal is used as an interrupt to the interrupt inputs of a versatile interface adaptor chip 219. The versatile interface adaptor (VIA) chip interrupt inputs are programmable by a microprocessor to respond either to a rising or a falling edge detection and an interrupt enable register allows independent enabling and masking of the interrupts. Such chips are well known in the art, an example being a SY6522 by SYNERTEK Incorporated.

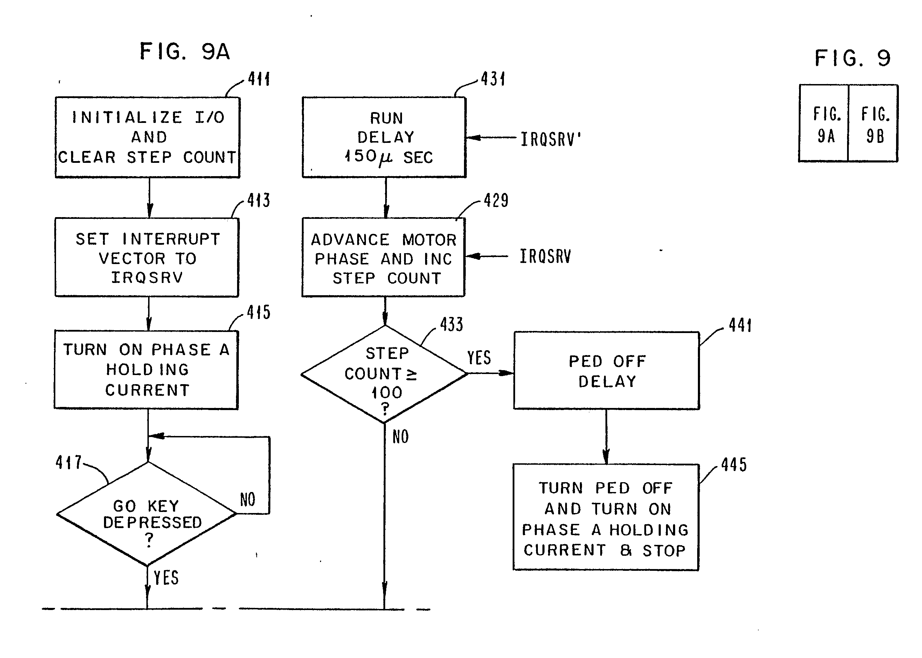

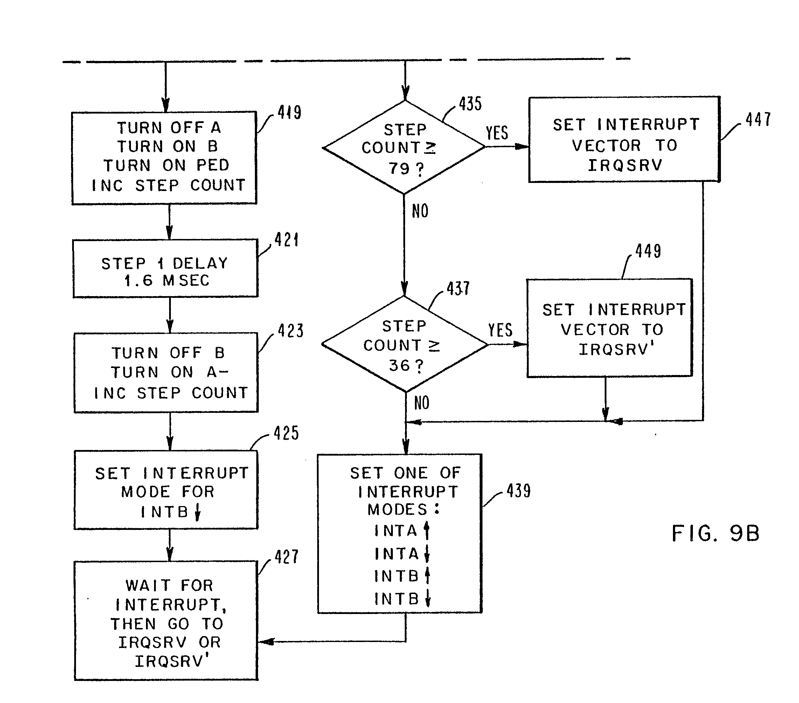

Under control of a suitable microprocessor 221, such as the SDY6502 (also by SYNERTEK), programmed in accordance with the microprogram steps listed in Table 1, the interrupt inputs of VIA 219 are alternately enabled and disabled and, at each interrupt, alternately set for rising and then falling edge detection (block 439 in Figure 9). This allows the detection of each zero crossing of both of the EMF waveforms shown in Figure 2 as they cross from positive to negative and negative to positive values.

# 0 123 807

TABLE 1

| INST LOCN | OP CD | OPER- AND | STNT NO | LABEL | OP | T | *OPERAND | COMMENT |
|---|---|---|---|---|---|---|---|---|
| | | | 1 | CLEMF9 | ORG | | H200 | ACCEL/SLEW/DECEL PROGRAM |
| 0200 | 78 | | 2 | | SEI | | | DISABLE INTERRUPTS |
| 0201 | A9 | 01 | 3 | | LDA | I | H01 | LOAD & STORE PHASE DATE |
| 0203 | 85 | 30 | 4 | | STA | 0 | H30 | |
| 0205 | A9 | 02 | 5 | | LDA | I | H02 | |
| 0207 | 85 | 31 | 6 | | STA | 0 | H31 | |
| 0209 | A9 | 04 | 7 | | LDA | I | H04 | |
| 020B | 85 | 32 | 8 | | STA | 0 | H32 | |
| 020D | A9 | 08 | 9 | | LDA | I | H08 | |
| 020F | 85 | 33 | 10 | | STA | 0 | H33 | |
| 0211 | A9 | 40 | 11 | | LDA | I | H40 | LOAD & STORE PCR DATA |
| 0213 | 85 | 50 | 12 | | STA | 0 | H50 | |
| 0215 | A9 | 10 | 13 | | LDA | I | H10 | |
| 0217 | 85 | 53 | 14 | | STA | 0 | H53 | |
| 0219 | A9 | 00 | 15 | | LDA | I | H00 | |
| 021B | 85 | 51 | 16 | | STA | 0 | H51 | |
| 021D | 85 | 52 | 17 | | STA | 0 | H52 | |
| 021F | A9 | 88 | 18 | | LDA | I | H88 | LOAD & STORE IER DATA |
| 0221 | 85 | 54 | 19 | | STA | 0 | H54 | |
| 0223 | 85 | 56 | 20 | | STA | 0 | H56 | |
| 0225 | A9 | 90 | 21 | | LDA | I | H90 | |
| 0227 | 85 | 55 | 22 | | STA | 0 | H55 | |
| 0229 | 85 | 57 | 23 | | STA | 0 | H57 | |
| 022B | 20 | 86 8B | 24 | | JSR | A | ACCESS | UNWRITE PROTECT SYSTEM RAM |
| 022E | A9 | 1F | 25 | | LDA | I | H1F | |
| 0230 | 8D | 02 AC | 26 | | STA | A | DDRB | INITIALIZE DDRB FOR OUTPUT |
| 0233 | A2 | 00 | 27 | | LDX | I | H00 | CLEAR STEP TABLE POINTER |
| 0235 | A0 | 00 | 28 | | LDY | I | H00 | CLEAR STEP COUNTER |
| 0237 | A9 | 90 | 29 | | LDA | I | H90 | |

6

**0 123 807**

TABLE 1 cont

| INST LOCN | OP CD | OPER- AND | STMT NO | LABEL | OP | T | *OPERAND | COMMENT |
|---|---|---|---|---|---|---|---|---|
| 0239 | 8D | FE FF | 30 | | STA | A | UIRQVCL | INTERRUPT VECTOR LOW←90 |
| 023C | A9 | 02 | 31 | | LDA | I | H02 | |
| 023E | 8D | FF FF | 32 | | STA | A | UIRQVCH | INTERRUPT VECTOR HIGH←02 |
| 0241 | A9 | 01 | 33 | | LDA | I | H01 | |
| 0243 | 8D | 00 AC | 34 | | STA | A | DRB | TURN ON PHASE A/ HOLDING CURRENT |
| 0246 | 20 | 23 89 | 35 | DNTGO | JSR | A | KEYQ | |
| 0249 | F0 | FB | 36 | | BEQ | | DNTGO | WAIT FOR KEY DEPRESSION |
| 024B | E8 | | 37 | | INX | | | INCREMENT TABLE POINTER |
| 024C | C8 | | 38 | | INY | | | INCREMENT STEP COUNTER |
| 024D | B5 | 30 | 39 | | LDA | Z | H30 | |
| 024F | 09 | 10 | 40 | | ORA | I | H10 | |
| 0251 | 8D | 00 AC | 41 | | STA | A | DRB | TURN ON PHASE B/STEP CURRENT |
| 0254 | E8 | | 42 | | INX | | | INCREMENT TABLE POINTER |
| 0255 | 20 | 77 02 | 43 | | JSR | A | DELAY1 | GOTO DELAY 1 ROUTINE |
| 0258 | B5 | 30 | 44 | | LDA | Z | H30 | |
| 025A | 09 | 10 | 45 | | ORA | I | H10 | |
| 025C | 8D | 00 AC | 46 | | STA | A | DRB | TURN ON PHASE C/STEP CURRENT |
| 025F | B5 | 50 | 47 | | LDA | Z | H50 | SET INTERRUPT MODE |
| 0261 | 8D | 0C AC | 48 | | STA | A | PCR | |
| 0264 | AD | 00 AC | 49 | | LDA | A | DRB | |
| 0267 | A9 | 7F | 50 | | LDA | I | H7F | |
| 0269 | 8D | 0E AC | 51 | | STA | A | IER | |
| 026C | B5 | 54 | 52 | | LDA | Z | H54 | |
| 026E | 8D | 0E AC | 53 | | STA | A | IER | |
| 0271 | E8 | | 54 | | INX | | | INCREMENT TABLE POINTER |
| 0272 | C8 | | 55 | | INY | | | INCREMENT STEP COUNTER |
| 0273 | 58 | | 56 | | CLI | | | ENABLE INTERRUPTS |
| 0274 | 4C | 74 02 | 57 | WAIT | JMP | A | WAIT | WAIT FOR INTERRUPT |
| 0277 | A9 | 02 | 58 | DELAY1 | LDA | I | H02 | TIME DELAY ROUTINE (1.6 MS) |
| 0279 | 85 | 41 | 59 | | STA | 0 | H41 | |

7

TABLE 1 cont

| INST LOCN | OP CD | OPER- AND | STMT NO | LABEL | OP | T | *OPERAND | COMMENT |
|---|---|---|---|---|---|---|---|---|
| 027B | A9 | 50 | 60 | OLOOP | LDA | I | H50 | |
| 027D | 85 | 42 | 61 | | STA | 0 | H42 | |
| 027F | C6 | 42 | 62 | ILOOP | DEC | 0 | H42 | |
| 0281 | D0 | FC | 63 | | BNE | | ILOOP | |
| 0283 | C6 | 41 | 64 | | DEC | 0 | H41 | |
| 0285 | D0 | F4 | 65 | | BNE | | OLOOP | |
| 0287 | 60 | | 66 | | RTS | | | RETURN |
| 0288 | A9 | 08 | 67 | | LDA | I | H08 | |
| 028A | 85 | 41 | 68 | | STA | 0 | H41 | |
| 028C | C6 | 41 | 69 | LP3 | DEC | 0 | H41 | |
| 028E | D0 | FC | 70 | | BNE | | LP3 | |
| 0290 | B5 | 30 | 71 | IRQSRV | LDA | Z | H30 | |
| 0292 | 09 | 10 | 72 | | ORA | I | H10 | |
| 0294 | 8D | 00 AC | 73 | | STA | A | DRB | TURN ON NEXT PHASE/ STEP CURRENT |
| 0297 | C8 | | 74 | | INY | | | INCREMENT STEP COUNTER |
| 0298 | C0 | 64 | 75 | | CPY | I | H64 | |
| 029A | F0 | 41 | 76 | | BEQ | | STPSRV | GOTO STOP ROUTINE IF STEP COUNTER=100 |
| 029( | C0 | 4F | 77 | | CPY | I | H4F | |
| 029E | F0 | 1E | 78 | | BEQ | | BRKSRV | GOTO BRAKE ROUTINE IF STEP COUNT=79 |
| 02A0 | C0 | 24 | 79 | | CPY | I | H24 | |
| 02A2 | F0 | 59 | 80 | | BEQ | | SLWSRV | GOTO SLEW ROUTINE IF STEP COUNT=36 |
| 02A4 | B5 | 50 | 81 | BACK | LDA | Z | H50 | SET NEW INTERRUPT MODE |
| 02A6 | 8D | 0C AC | 82 | | STA | A | PCR | |
| 02A9 | AD | 00 AC | 83 | | LDA | A | DRB | CLEAR IER |
| 02AC | A9 | 7F | 84 | | LDA | I | H7F | |
| 02AE | 8D | 0E AC | 85 | | STA | A | IER | CLEAR IER |
| 02B1 | B5 | 54 | 86 | | LDA | Z | H54 | |
| 02B3 | 8D | 0E AC | 87 | | STA | A | IER | REWRITE IER WITH NEW VALUE |

8

**0 123 807**

TABLE 1 cont

| INST LOCN | OP CD | OPER- AND | STMT NO | LABEL | OP | T | *OPERAND | COMMENT |
|---|---|---|---|---|---|---|---|---|
| 02B6 | E0 | 03 | 88 | | CPX | I | H03 | |
| 02B8 | D0 | 02 | 89 | | BNE | | NYET | |
| 02B/ | A2 | FF | 90 | | LDX | I | HFF | |
| 02BC | E8 | | 91 | NYET | INX | | | X←X←1 FOR X≠3, X←0 FOR X=3 |
| 02BD | 40 | | 92 | | RTI | | | RETURN |
| 02BE | A9 | 90 | 93 | BRKSRV | LDA | I | H90 | |
| 02C0 | 8D | FE FF | 94 | | STA | A | UIRQVCL | SET NEW INTERRUPT VECTOR |
| 02C3 | A9 | 40 | 95 | | LDA | I | H40 | LOAD AND STORE PCR DATA |
| 02C5 | 85 | 52 | 96 | | STA | 0 | H52 | |
| 02C7 | A9 | 10 | 97 | | LDA | I | H10 | |
| 02C9 | 85 | 51 | 98 | | STA | 0 | H51 | |
| 02CP | A9 | 00 | 99 | | LDA | I | H00 | |
| 02CD | 85 | 50 | 100 | | STA | 0 | H50 | |
| 02CF | 85 | 53 | 101 | | STA | 0 | H53 | |
| 02D1 | 4C | A4 02 | 102 | | JMP | A | BACK | |
| 02D4 | A9 | FF | 103 | DELAY3 | LDA | I | HFF | PEDESTAL OFF DELAY ROUTINE |
| 02D6 | 85 | 41 | 104 | | STA | 0 | H41 | |
| 02D8 | C6 | 41 | 105 | LP2 | DEC | 0 | H41 | |
| 02DA | D0 | FC | 106 | | BNE | | LP2 | |
| 02DC | 60 | | 107 | | RTS | | | |
| 02DD | A9 | 7F | 108 | STPSRV | LDA | I | H7F | |
| 02DF | 8D | 0E AC | 109 | | STA | A | IER | CLEAR IER |
| 02E2 | 20 | D4 02 | 110 | | JSR | A | DELAY3 | GOTO PED OFF DELAY ROUTINE |
| 02E5 | B5 | 30 | 111 | | LDA | Z | H30 | TURN OFF PEDESTAL |
| 02E7 | 8D | 00 AC | 112 | | STA | A | DRB | |
| 02EA | 40 | | 113 | | RTI | | | RETURN |
| 02EB | A0 | 00 | 114 | ACCRSV | LDY | I | H00 | Y←0 |
| 02ED | A9 | 40 | 115 | | LDA | I | H40 | LOAD AND STORE PCR DATA |
| 02EF | 85 | 50 | 116 | | STA | 0 | H50 | |
| 02F1 | A9 | 10 | 117 | | LDA | I | H10 | |

9

TABLE 1 cont

| INST LOCN | OP CD | OPER- AND | STMT NO | LABEL | OP | T | *OPERAND | COMMENT |
|---|---|---|---|---|---|---|---|---|
| 02F3 | 85 | 53 | 118 | | STA | 0 | H53 | |
| 02F5 | 98 | | 119 | | TYA | | | |
| 02F6 | 85 | 51 | 120 | | STA | 0 | H51 | |
| 02F8 | 85 | 52 | 121 | | STA | 0 | H52 | |
| 02FA | 4C | A4 02 | 122 | | JMP | A | BACK | |
| 02FD | A9 | 88 | 123 | SLWSRV | LDA | I | H88 | |
| 02FF | 8D | FE FF | 124 | | STA | A | UIRQVCL | SET NEW INTERRUPT VECTOR |
| 0302 | 4C | A4 02 | 125 | | JMP | A | BACK | |
| 0305 | C6 | 43 | 126 | DELAY2 | DEC | 0 | H43 | SLEW DELAY ROUTINE |
| 0307 | D0 | FC | 127 | | BNE | | DELAY2 | |
| 0309 | 60 | | 128 | | RTS | | | |
| | | | 129 | | END | | | |

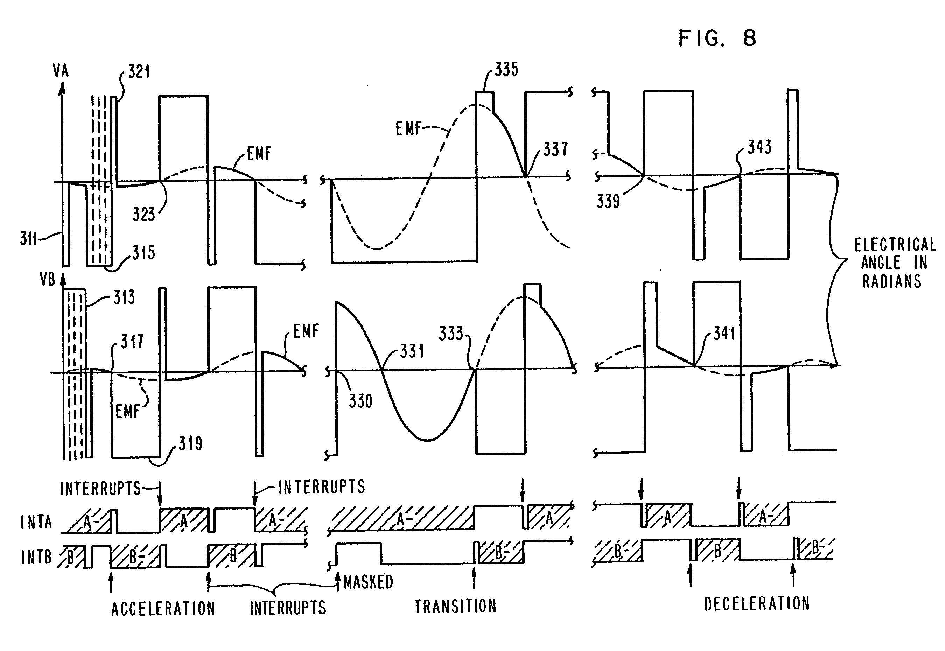

Figure 8 is a timing diagram which illustrates the relationship between the EMF induced in a winding by the permanent magnet of the rotor and the phase select signals which provide the excitation pulses to the windings to drive the motor. In order to get the motor started, two open loop pulses are generated under the control of the microprocessor. Subsequent excitation pulses are initiated by sensing and detecting the zero crossing points of the waveforms of the EMF's induced in the windings by the permanent magnet of the rotor. In this example, the drive circuit is switched so as to provide an excitation pulse to each winding at the instant of the zero crossing of the EMF induced in that winding. This results in a lead angle of two steps. The sequence of events and interrupt control programs are shown in Table 1 and in the flow diagram of Figure 9. The duration of the first excitation pulse into a winding is selected so that for a minimum load, the open circuit condition of the winding at the end of the pulse occurs just before the first zero crossing of the EMF waveform. This provides the maximum adaptability to load increases.

Referring again to Figure 8 it is assumed that a holding current has been applied to the A pole windings as at statement 34 in Table 1 and block 415 of Figure 9, to keep the motor held at a detent position. After depression of the Go key (block 417) the holding current is turned off at time zero shown at block 419 of Figure 9. This results in the generation of an inductive kick which is clamped as described with reference to Figures 3, 4. This is represented by the part of the waveform labelled 311 in Figure 8. At the same time as the excitation of the A pole windings is interrupted, the B pole windings are excited as shown at 313. The current.limiting action of comparator 103 and bistable circuit 105 switching the drive transistors 43, 45 alternately "off" and "on" is shown in Figure 8 as the dotted lines within voltage waveforms 313 and 315. Waveforms 319 etc. will have a similar pulse width modulation but for clarity of the illustration, these details are not shown. As the rotor rotates the permanent magnet on the rotor induces an EMF in each of the A pole and B pole windings as illustrated in the graphs in Figure 8.

A 1.6 millisecond time delay is now counted in accordance with statement (block 421 in Figure 9) by the microprocessor before returning to the microprogram at statement 44 (block 423 in Figure 9) to turn on transistors 43, 45 of Figure 6 causing current to flow in the A pole windings in the direction reverse to its original holding current. The voltage across the A pole windings due to the excitation pulse is represented at 315 in Figure 8. At this time, the versatile interrupt adaptor 219 is set up to detect the zero crossing 317 of the EMF induced in the B pole windings by the permanent magnet of the rotor and generate an interrupt signal. The program of Table 1 then waits at statement 57 (block 427 in Figure 9) until the interrupt signal is generated by the circuits in Figure 7. When the interrupt signal is generated, the program jumps to the interrupt service routine at statement 71, (block 429 in Figure 9) which switches off the current in the A pole windings and turns on the current in the B pole windings in accordance with the voltage waveform 319. The inductive kick 321 in the A pole windings at the end of the excitation pulse is clamped to the power supply voltage (Figures 3, 4). This causes the A pole windings current to decay long before the EMF induced in the A pole windings by the permanent magnet of the motor crosses zero at 323. This sequence of steps is repeated at each subsequent detection of a zero crossing in either the A pole or B pole windings and the generation of an interrupt signal as in Figure 7 for the acceleration mode of the motor.

After turning on the transistors to drive current through the B pole windings, the program continues to check at blocks 433, 435, and 437, the number of steps that have been taken by the motor. Being a one hundred step example, the motor is accelerated for 36 steps, operated in the run mode as shown in Figure 5 until step 79 and then decelerated until step 100, at which time a lower steady state current is continuously applied (block 445 in Figure 9) to one of the windings to hold the motor in the stop position. The supply of the lower steady state current is controlled by the pedestal signal labelled PED provided by the versatile interface adaptor 219 to the drive circuit of Figure 6. PED defines a lower value reference voltage which causes comparator 103 to provide shorter voltage pulses to the windings being excited.

The motor is operated with the same interrupt programming for both acceleration and run states. During the run state, the positive acceleration torque just balances the motor load. In order to make the transition from acceleration to deceleration, it is necesary to change the interrupt programming to detect transitions of the opposite polarity and then to introduce a single masking delay.

This is shown in Figure 8 where the positive zero crossing transition 330 is masked. Since the responsive polarity of the interrupt input has been changed the interrupt normally provided by the zero crossing at 331 is ignored so as not to cause a change in the current in the winding. Instead, the zero crossing 180° later at 333 is used to switch the windings and cause currents to flow providing negative torque. As can be seen at 335, the inductive kick in the A pole windings is wider during deceleration because the EMF induced in the windings by the permanent magnet in the rotor adds energy to the inductive kick. So long as the current has decayed to zero before the next zero crossing at 337, this wider current decay pulse does not present a problem. For the remainder of the deceleration mode the motor continues to switch at each zero crossing until step 100 where the program ends with the A pole windings excited to hold the motor in the stop position.

After the program has driven the step motor for the 36 steps of the acceleration mode, a switching delay is introduced to reduce the torque to that required to drive the load and cause a constant velocity. This delay which results in the conduction angle in one pair of windings being nearly centred on the zero crossing of the EMF waveform in the other pair of windings is shown clearly in Figure 5 as RUN DELAY. The RUN DELAY is provided in the microprogram of Table 1 by changing the interrupt vector to statement 67 (block 431 in Fig. 9) which introduces a delay routine before the interrupt is serviced at statement 71.

From the foregoing description of a drive and detection circuit for a step motor, it can be seen that a low impedance two pole step motor can be driven from a relatively high voltage supply in such a way that the zero crossings of the back EMF induced in each winding by the permanent magnet of the rotor can be directly detected and used for the production of pulses to control the operation of the drive circuit of the motor without the need for separate emitters or other velocity or position detecting hardware. The foregoing and other advantages, will be clear to those skilled in the art of step motor control so as to enable them to make and use the drive circuit described.

**Claims**

1. A drive and detection circuit for a step motor of the type having a permanent magnet rotor (11) and two sets of stator windings (21—23, 25—27, 31—33, 35—37) comprising:

a supply voltage for said step motor,

drive means (41, 43, 45, 47, 51, 53, 55, 57), connected to said supply voltage for providing excitation of said stator windings, and

detection means (211, 213, 215, 217) for detecting the value of the back EMF induced in each set of windings by the permanent magnet rotor,

characterised in that

said drive means provides orthogonal excitation of said stator windings whereby only one set of windings is excited at any instant.

2. A drive and detection circuit as claimed in claim 1 characterised in that said drive means (51, 53, 55, 57) operates to dampen any residual current flowing in each set of windings after the termination of excitation so that there is no residual current flowing in said set of windings when said detection means detects a zero value of the back EMF induced in said set of windings.

3. A drive and detection circuit as claimed in claim 2 characterised in that said drive means comprises for each set of windings a set of four switching devices (41, 43, 45, 47) connected in an H configuration circuit and adapted to provide excitation current to said set of windings, and diode devices (51, 53, 55, 57) connected across said switching devices so as to dampen any current induced in said set of windings when said switching devices are operated to interrupt the supply of excitation current to said windings.

4. A drive and detection circuit as claimed in any one of the preceding claims characterised in that said detector means comprises comparator means (215, 217) for comparing said back EMF with a reference voltage.

5. A drive and detection circuit as claimed in any one of the preceding claims characterised in that said drive means comprises current responsive means (101, 103, 105) for limiting the current through any of said windings in order to prevent overheating of said windings.

6. A drive and detection circuit as claimed in any one of the preceding claims comprising a programmed computer (221) for controlling the operation of said drive means and said detector means.

7. A method of operating a step motor of the type having a permanent magnet rotor (11) and two sets of stator windings (21, 23, 25, 27, 31, 33, 35, 37) comprising:

selectively connecting a supply voltage to each set of stator windings so as to excite said windings in a predetermined sequence and detecting the value of the back EMF induced in each set of windings by said permanent magnet rotor

and using the detection of selected values of said back EMF in order to control the excitation of said sets of windings,

characterised in that

said sets of windings are excited orthogonally so that only one set of windings is excited at any instant.

**Patentansprüche**

1. Treiber- und Detektorschaltung für einen Schrittmotor mit Permanentmagnetrotor (11) und zwei Sätzen von Ständerwicklungen (21—23, 25—27, 31—33, 35—37), mit
einer Versorgungsspannung für den Schrittmotor,
an die Versorgungsspannung angeschlossenen Antriebseinrichtungen (41, 43, 45, 47, 51, 53, 55, 57), durch die die Ständerwicklungen erregt werden,
Meßeinrichtungen (211, 213, 215, 217) zum Messen des Wertes der hinteren EMK, die durch den Permanentmagnetrotor in jedem Ständerwicklungssatz induziert worden ist,
dadurch gekennzeichnet, daß
die Ständerwicklungen durch die Antriebseinrichtungen orthogonal erregt werden, wodurch zu einem beliebigen Zeitpunkt jeweils nur ein Wicklungssatz erregt wird.

2. Treiber- und Detektorschaltung nach Anspruch 1, dadurch gekennzeichnet, daß die Antriebseinrichtungen (51, 53, 55, 57) jeglichen Reststrom, der in jedem Wicklungssatz fließt, nach beendeter Erregung dämpfen, so daß kein Reststrom mehr durch den Wicklungssatz fließt, wenn die Detektorschaltung einen Nullwert der hinteren EMK mißt, der in den Wicklungssatz induziert worden ist.

3. Treiber- und Detektorschaltung nach Anspruch 2, dadurch gekennzeichnet, daß die Antriebseinrichtungen für jeden Wicklungssatz einen Satz von vier Schaltvorrichtungen (41, 43, 45, 47) aufweisen, die in Form einer H-Schaltung miteinander verbunden sind und dem Wicklungssatz Erregerstrom zuführen, und daß Dioden (51, 53, 55, 57) die Schaltvorrichtungen überbrücken, um jeglichen Reststrom dämpfen zu können, der in den Wicklungssatz induziert worden ist, wenn die Schaltvorrichtungen die Zufuhr von Erregerstrom zu den Wicklungen unterbrechen.

4. Trieber- und Detektorschaltung nach einem der vorhergehenden Ansprüche, dadurch gekennzeichnet, daß die Meßeinrichtung Vergleicher (215, 217) für den Vergleich des hinteren EMK-Wertes mit einer Bezugsspannung besitzt.

5. Trieber- und Detektorschaltung nach einem der vorhergehenden Ansprüche, dadurch gekennzeichnet, daß die Meßeinrichtung auf Strom reagierende Vorrichtungen für die Begrenzung des durch die Wicklungen fließenden Stroms aufweist, so daß Überhitzung der Wicklungen vermieden wird.

6. Treiber- und Detektorschaltung nach einem der vorhergehenden Ansprüche, gekennzeichnet durch einen programmierten Computer (221) zur Steuerung des Betriebs von Treiber- und Detektoreinrichtungen.

7. Verfahren zum Betreiben eines Schrittmotors mit Permanentmagnetrotor (11) und zwei Sätzen von Ständerwicklungen (21, 23, 25, 27, 31, 33, 35, 37), wobei
selektiv eine Versorgungsspannung an jeden der Wicklungssätze angeschlossen wird, so daß die Wicklungen in vorbestimmter Reihenfolge erregt werden und der Wert des hinteren EMK, der in jeden der Wicklungssätze durch den Permanentmagnetrotor induziert worden ist, gemessen wird, und wobei
die gemessenen ausgewählten Werte der hinteren EMK zur Steuerung der Erregung der Wicklungssätze verwendet werden,
dadurch gekennzeichnet, daß
die Wicklungssätze orthogonal erregt werden, so daß zu einem beliebigen Zeitpunkt jeweils nur ein Wicklungssatz erregt werden kann.

**Revendications**

1. Circuit de commande et de détection pour un moteur pas-à-pas du type ayant un rotor à aimant permanent (11) et deux jeux d'enroulements de stator (21—23, 25—27, 31—33, 35—37) comportant:
une source de tension pour ledit moteur pas-à-pas,
des moyens de commande (41, 43, 45, 47, 51, 53, 55, 57) connectés à ladite source de tension pour assurer l'excitation desdits enroulements de stator, et
des moyens de détection (211, 213, 215, 217) pour détecter la valeur de la force contre-électromotrice induite dans chaque jeu d'enroulements par le rotor à aimant permanent,
caractérisé en ce que
lesdits moyens de commande procurent une excitation orthogonale desdits enroulements de stator, grâce à laquelle un seul jeu des enroulements est excité à chaque instant.

2. Circuit de commande et de détection selon la revendication 1, caractérisé en ce que lesdits moyens de commande (51, 53, 55, 57) fonctionnent de façon à atténuer tout courant résiduel circulant dans chaque des d'enroulements après l'achèvement de l'excitation de telle sorte qu'il n'y ait pas de courant résiduel circulant dans ledit jeu d'enroulements lorsque lesdits moyens de détection détectent une valeur nulle de la force contre-électromotrice induite dans ledit jeu d'enroulements.

3. Circuit de commande et de détection selon la revendication 2, caractérisé en ce que lesdits moyens de commande comportent, pour chaque jeu d'enroulements, un jeu de quatre dispositifs de commutation (41, 43, 45, 47) connectés dans un circuit à configuration en H et adaptés pour mesurer l'excitation en courant dudit jeu d'enroulements, et des dispositifs de diodes (51, 53, 55, 57) connectés aux bornes desdits dispositifs de commutation de façon à atténuer tout courant induit dans ledit jeu l'enroulements lorsque lesdits dispositifs de commutation sont actionnés pour interrompre l'arrivée de l'excitation en courant dans lesdits enroulements.

4. Circuit de commande et de détection selon l'une quelconque des revendications précédentes, caractérisé en ce que lesdits moyens de détection comportent des moyens formant comparateur (215, 217) pour comparer ladite force contre-électromotrice avec une tension de référence.

5. Circuit de commande et de détection selon l'une quelconque des revendications précédentes, caractérisé en ce que lesdits moyens de commande comportent des moyens réagissant au courant pour limiter le courant dans l'un quelconque desdits enroulements afin d'éviter la surchauffe desdits enroulements.

6. Circuit de commande et de détection selon l'une quelconque des revendications précédentes comportant un ordinateur programmé (221) pour commander le fonctionnement desdits moyens de commande de desdits moyens de détection.

7. Procédé pour faire fonctionner un moteur pas-à-pas du type ayant un rotor à aimant permanent (11) et deux jeux d'enroulements de stator (21, 23, 25, 27, 31, 33, 35, 37) comportant

la connexion sélective d'une source de tension sur chaque jeu d'enroulements de stator de façon à exciter lesdits enroulements selon une séquence prédéterminée et la détection de la valeur de la force contre-électromotrics induite dans chaque jeu d'enroulements par ledit rotor à aimant permanent

et l'utilisation de la détection de valeurs sélectionnées de ladite force contre-électromotrice de façon à contrôler l'excitation desdits jeux d'enroulements,

caractérisé en ce que

lesdits jeux d'enroulements sont excités de façon orthogonale de telle sorte qu'un seul jeu d'enroulements soit excité à tout instant.

FIG. 1

FIG. 2

FIG. 3

FIG. 4

DECAYING
CURRENT

FIG. 5

FIG. 6A

A IN

+5VDC

41

21    23

A              A-

25        27
WINDING
A

43

+5VDC

111              113

AIN                    ĀIN

+12VDC              +12VDC

45        47

+5VDC    103

101

Q    D

105        CLR

CLK        +12VDC

20KHz

PED

4

FIG. 6B

+5VDC

+5VDC

33    31

B-    B

37    35

WINDING
B

115

$\overline{BIN}$

117

BIN

+12VDC    +12VDC

FIG. 6

| FIG. 6A | FIG. 6B |

FIG. 7

FIG. 8

## FIG. 9A

FIG. 9

| FIG. 9A | FIG. 9B |
|---------|---------|

**411**
INITIALIZE I/O AND CLEAR STEP COUNT

↓

**413**
SET INTERRUPT VECTOR TO IRQSRV

↓

**415**
TURN ON PHASE A HOLDING CURRENT

↓

**417**
GO KEY DEPRESSED ? — NO

YES ↓

---

**431**
RUN DELAY 150μ SEC ← IRQSRV'

↓

**429**
ADVANCE MOTOR PHASE AND INC STEP COUNT ← IRQSRV

↓

**433**
STEP COUNT ≥ 100 ? — YES → 

NO ↓

**441**
PED OFF DELAY

↓

**445**
TURN PED OFF AND TURN ON PHASE A HOLDING CURRENT & STOP

0 123 807

FIG. 9B